# FASCICULE DE BREVET EUROPEEN

(11) **EP 4 554 915 B1**
(45) Date de publication et mention de la délivrance du brevet: **02.09.2026**
(21) Numéro de dépôt: 23739287.3
(22) Date de dépôt: 10.07.2023
(51) Int. Cl.: C03C 25/106, C03C 25/1065, G02B 6/10

(54) **ENDUCTION D'UNE FIBRE NOTAMMENT OPTIQUE PAR UN REVETEMENT A BASE DE NITRURE DE BORE**
BESCHICHTUNG EINER FASER, INSBESONDERE EINER OPTISCHEN FASER, MIT EINER BESCHICHTUNG AUF BORNITRIDBASIS
COATING A FIBRE, PARTICULARLY AN OPTICAL FIBRE, WITH A BORON NITRIDE-BASED COATING

(30) Priorité: 12.07.2022 FR 2207160
(43) Date de publication de la demande: 21.05.2025
(73) Titulaire: Centre National de la Recherche Scientifique, 75016 Paris (FR); Commissariat à l'Energie Atomique et aux Energies Alternatives, 75015 Paris (FR); Université de Lille, 59800 Lille (FR)
(72) Inventeur: BERNARD, Rémy, 59110 LA MADELEINE (FR); PASTRE, Aymeric, 59810 LESQUIN (FR); LAGO RACHED, Laure, 91191 Gif-sur-Yvette Cedex (FR)
(74) Mandataire: Santarelli
(86) Numéro de dépôt international: PCT/EP2023/068997
(87) Numéro de publication internationale: WO 2024/013066

(56) Documents cités:
- WO-A1-2020/222152
- US-A1- 2015 104 641
- LUAN XIN'GANG ET AL: "Design, preparation, and properties of a boron nitride coating of silica optical fiber for high temperature sensing applications", JOURNAL OF ALLOYS AND COMPOUNDS, ELSEVIER SEQUOIA, LAUSANNE, CH, vol. 850, 20 August 2020 (2020-08-20), XP086260632, ISSN: 0925-8388, [retrieved on 20200820], DOI: 10.1016/J.JALLCOM.2020.156782

## Description

### Domaine technique

La présente invention concerne l'enduction de fibres, notamment optiques par un revêtement à base de nitrure de bore (BN), ainsi que la fabrication de telles fibres. La présente invention concerne également des composants optiques comprenant de telles fibres optiques.

### État de la technique

L'utilisation de nitrure de bore dans un revêtement de protection de fibres optiques.

Ainsi, la demande internationale WO2020/222152^{[1]} décrit un procédé de revêtement d'un guide d'onde optique avec du nitrure de bore, sous forme de nanotubes (BNNT). Toutefois, ce procédé présente l'inconvénient de ne pouvoir être mis en œuvre que pour recouvrir de faibles longueurs, car nécessitant la mise en œuvre préalable d'une couche d'accroche et/ou la texturation de la surface du guide d'ondes (notamment par une attaque à l'acide fluorhydrique HF). Ces méthodes de dépôts faisant appel à une couche d'accroche ne sont pas compatibles avec un dépôt sur de grandes longueurs de fibre optique. En outre, un tel procédé est très coûteux car nécessitant la synthèse de nanotubes de BN.

Par ailleurs, il est également connu de l'homme du métier des revêtements de BN/SiBCN sur des fibres de silice et des fibres de saphir^{[2, 3, 4]}. Le procédé de dépôt mis en œuvre dans ce cas est un procédé de dépôt chimique en phase vapeur permettant un dépôt de 2,5 µm d'épaisseur pour une durée de dépôt de 24 heures. Il n'est pas applicable sur des fibres de grandes longueurs.

Enfin, la demande de brevet chinois CN106066508 décrit un matériau de gainage d'une fibre comprenant une polyétheréthercétone et un mélange de charges inorganiques comprenant du talc, du calcaire, du carbonate de calcium, du sulfate de baryum, du nitrure de bore, du dioxyde de silicium ou de la bentonite (la bentonite ou le nitrure de bore étant pas citées toutefois comme utilisées en association). L'objectif d'un tel revêtement est l'augmentation de la résistance à l'élongation de la fibre. En outre, ce matériau de gainage inorganique n'est pas appliqué directement sur la fibre. Ses propriétés réfractaires ne semblent pas être les propriétés recherchées. Il est utilisé comme matériau de remplissage et non comme revêtement à proprement parler. Enfin, rien n'est dit toutefois concernant la longueur de la fibre, ni l'épaisseur du revêtement.

Toutefois, aucun des documents mentionnés n'enseigne un procédé de réalisation d'un revêtement adhérent sur des fibres de grandes longueurs, et qui en outre présente une résistance élevée aux basses et hautes températures et aux contraintes mécaniques.

### Description de l'invention

Afin de résoudre les problèmes ci-dessus mentionnés, le demandeur a mis au point une fibre comprenant une âme en matériau fibrable et présentant une surface externe, ladite fibre étant caractérisée en ce qu'elle comporte en outre un revêtement extérieur comportant un mélange de nitrure de bore hexagonal et de bentonite, à raison d'au moins 10% en poids de bentonite par rapport au poids total dudit revêtement extérieur.

En deçà de 10 % en poids de bentonite par rapport au poids total dudit revêtement extérieur, le revêtement n'adhère pas à la fibre, tandis qu'au-dessus 35 % en poids de bentonite par rapport au poids total dudit revêtement extérieur, la fibre ainsi revêtue n'est plus assez flexible.

On entend par matériau fibrable, un matériau permettant un fibrage, c'est-à-dire qui peut subir une transformation d'un matériau massif en fibre. Il peut s'agir d'un matériau vitreux présentant une transition vitreuse permettant son étirage. De préférence, l'âme peut être constituée d'un matériau choisi parmi les matériaux à transition vitreuse et le verre de saphir.

De manière avantageuse, l'âme peut être constituée d'un matériau choisi parmi les matériaux à transition vitreuse et le verre de saphir.

Selon un premier mode de réalisation avantageux de la présente invention, le revêtement extérieur, la fibre selon l'invention pourra en outre comprendre une gaine de protection en matériau polymère entourant l'âme sur au moins une partie de la longueur de la fibre, la gaine de protection présentant une surface interne en contact avec l'âme et une surface externe en contact avec le revêtement extérieur.

Selon un deuxième mode de réalisation avantageux de la présente invention, le revêtement extérieur pourra être directement en contact avec l'âme.

De manière avantageuse, quel que soit le mode de réalisation envisagé, l'âme (11) de la fibre peut présenter un diamètre compris entre 100 µm et 10 mm, de préférence entre 100 µm et 140 µm, et mieux de l'ordre de 125 µm.

De manière avantageuse, quel que soit le mode de réalisation envisagé, le revêtement extérieur peut présenter une épaisseur comprise entre 5 et 240 µm. Si l'âme est de forme cylindrique, l'épaisseur du revêtement extérieur sera alors une épaisseur radiale comprise entre 5 et 240 µm.

Dans le cadre de la présente invention, la fibre selon l'invention pourra être de préférence une fibre optique.

La présente invention a également pour objet un composant optique comprenant une ou plusieurs fibres optiques selon l'invention.

A titre de composants optiques selon l'invention, on peut notamment citer les fibres multicœurs, fibres microstructurées, fibres effilées (ou *« taper »* en langue anglaise), les coupleurs optiques avec une ou plusieurs fibres en entrée et une ou plusieurs fibres en sortie, les fibres laser, et les réseaux de Bragg fibrés, sans que cette liste ne soit limitative.

Le demandeur a mis au point un procédé de fabrication d'une telle fibre.

A cette fin, le demandeur a mis au point un procédé de fabrication d'une composition pâteuse pour revêtement de fibre, comprenant les étapes suivantes :
A) dispersion dans de l'eau d'un mélange sec de nitrure de bore BN hexagonal et de bentonite pour assurer un bon mélange de la bentonite et du nitrure de bore, le mélange sec comprenant au moins 10% en poids de bentonite par rapport au poids total dudit mélange sec, pour former une suspension aqueuse ;
B) évaporation de l'eau contenue dans ladite suspension aqueuse, jusqu'à obtenir un extrait sec pulvérulent ;
C) dispersion dudit extrait sec pulvérulent dans de l'eau pour former une composition pâteuse, à raison d'au moins 40% massique d'extrait sec dans l'eau.

De manière avantageuse, l'étape B) du procédé de fabrication d'une composition pâteuse pour revêtement de fibre selon l'invention pourra être réalisée sous vide primaire ou sous pression atmosphérique, et à une température pouvant être comprise entre 50°C et 90°C, de préférence entre 60°C et 80°C, et mieux de l'ordre de 60°C.

La présente invention a également pour objet une composition pâteuse pour revêtement de fibre susceptible d'être obtenu par le procédé de fabrication ci-dessus mentionné.

De manière avantageuse, la composition pâteuse selon l'invention pourra en outre comprendre un dopant, qui pourra être avantageusement à base de carbone, les oxydes de zirconium, de titane et les nanoparticules de métaux ou de semiconducteurs, charges organiques (composés moléculaires organiques et organométalliques), charges inorganiques et leurs mélanges.

Ainsi, la présente invention a encore pour objet un procédé de fabrication d'une fibre selon l'invention mettant en œuvre une telle composition pâteuse pour obtenir le dépôt d'un revêtement extérieur 2 sur la surface externe 111, 121 d'une fibre 1, le procédé comprenant les étapes suivantes :
A) fourniture ou réalisation d'une âme 11 de fibre en matériau fibrable, ladite âme 11 recouverte ou non d'une gaine de protection 12 ;
B) fourniture d'une composition pâteuse pour revêtement de fibre selon l'invention ;
C) enduction d'au moins une partie de ladite fibre 1 avec ladite composition pâteuse (20) de façon à former une couche humide 21 sur ladite fibre 1 ;
D) traitement thermique de ladite fibre optique 1 revêtue de ladite couche humide 21 à une température comprise entre 100°C et 250°C pendant une durée suffisante pour former une couche revêtement extérieur 2 apte à être manutentionnée (en l'occurrence enroulée et manipulée).

De manière avantageuse, les étapes C et D peuvent être réitérées une ou plusieurs fois jusqu'à obtention de l'épaisseur souhaitée de revêtement extérieur.

Selon un premier mode de réalisation avantageux du procédé de fabrication d'une fibre selon l'invention, l'étape A) pourra être une étape de fourniture d'une fibre comprenant une âme en matériau fibrable et recouverte d'une gaine de protection, de sorte que les étapes B à D seront réalisées postérieurement à la fabrication de la fibre (1) ; et l'étape D) de traitement thermique sera un séchage réalisé dans une étuve à 100°C.

Selon ce premier mode de réalisation, le procédé de fabrication d'une fibre selon l'invention peut en outre comprendre une étape A' de dénudation de la fibre selon l'invention, pour supprimer sur au moins une partie de la longueur de la fibre, la gaine de protection. De préférence, cette étape A' peut être réalisée par mise en contact de la gaine de protection avec une solution de dichlorométhane, dans le cas d'une gaine de protection en polyacrylate. D'autres méthodes de dénudation de la fibre sont possibles, par exemple par dénudation mécanique à la pince ou à la lame de rasoir. Toutefois, en ce qui concerne des fibres optiques destinées à être manipulées au moins une fois, il est préférable de passer par une dénudation chimique.

Selon un deuxième mode de réalisation avantageux du procédé de fabrication d'une fibre selon l'invention, lequel l'étape A) pourra consister en une étape de réalisation d'une fibre sur une tour de fibrage.

Selon le deuxième mode de réalisation, l'étape B d'enduction de la composition pâteuse pourra être réalisée dans un porte-filière disposé sous le premier four vertical en condition statique et l'étape D de traitement thermique pourra être réalisée dans un deuxième four vertical situé sous le premier four vertical et le porte-filière.

D'autres avantages et particularités de la présente invention résulteront de la description qui va suivre, donnée à titre d'exemple non limitatif et faite en référence aux figures annexées et aux exemples.

### Brève description des figures

Les exemples suivants illustrent l'invention, en liaison avec les figures commentées ci-dessus, sans toutefois en limiter la portée :
- [Fig 1] : La figure 1 comprend une vue en coupe transversale (1A) et une vue en perspective (1B) d'un premier exemple de fibre selon l'invention (fibre sans gaine de protection).
- [Fig 2] : La figure 2 comprend une vue en coupe transversale (2A) et une vue en perspective (2B) d'un deuxième exemple de fibre selon l'invention (fibre avec gaine de protection).
- [Fig 3] La figure 3 montre schématiquement un dispositif pour la mise en œuvre du procédé de fabrication d'une fibre selon le deuxième mode de réalisation, c'est-à-dire un procédé dans lequel la composition pâteuse de revêtement est appliquée sur tour de fibrage.
- [Fig 4] : La figure 4 comprend deux photographies au microscope optique de la fibre 1 obtenue à l'exemple 2 (post-procédé) recouverte par un revêtement extérieur 2 à base de nitrure de bore hexagonal et de bentonite après un traitement thermique à 1000°C, à différentes distances de focalisation (4A sur les bords de la fibre et 4B à la surface de la fibre).
- [Fig 5] : La figure 5 montre la variation relative au cours du temps de la réponse d'un réseau de Bragg (DI/I) sous 800°C pendant 800 heures, pour une fibre nue (en trait continu) et une fibre selon l'invention, munie d'un revêtement comprenant trois couches de BN (en traits pointillés).
- [Fig 6] : La figure 6 comprend deux photographies au microscope optique de de la fibre 1 obtenue à l'exemple 4 (tour de fibrage), recouverte par un revêtement extérieur 2 à base de nitrure de bore hexagonal et de bentonite et ayant subi un traitement thermique à 800°C : la première photographie correspond à la fibre obtenue juste à l'issue du traitement thermique à 800°C (6A), l'autre photographie (6B) correspondant à la fibre obtenue à l'issue d'une trempe à l'azote liquide pendant 2 heures à -195,72°C postérieure au traitement thermique.

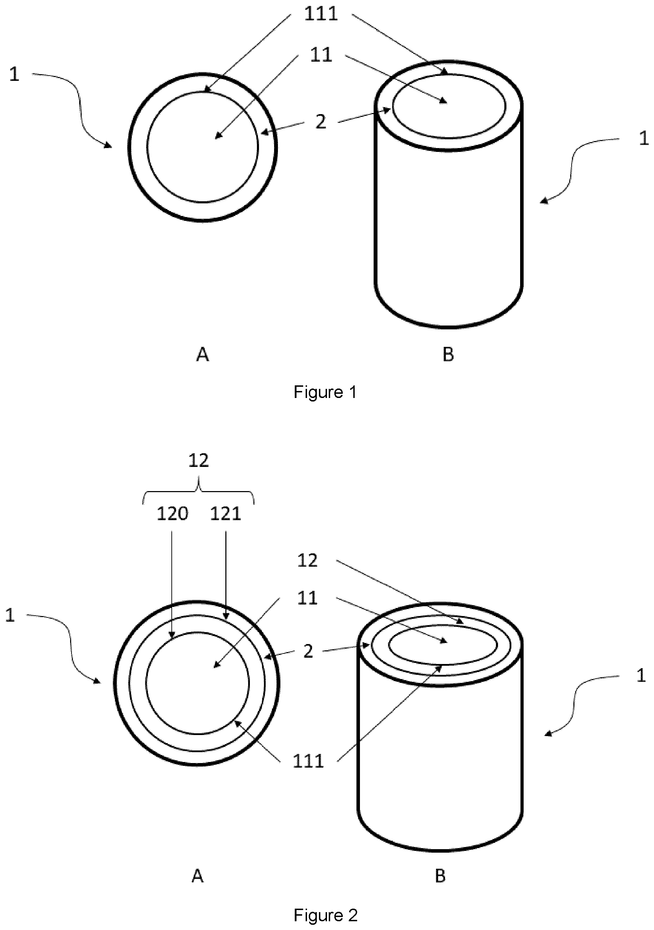

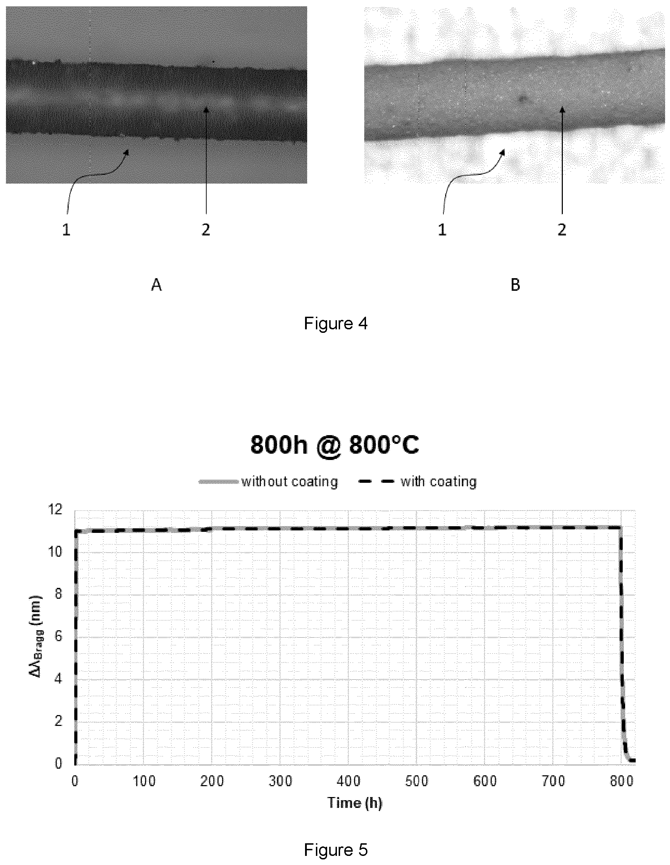

Les figures 1 et 2 sont décrites plus en détail ci-après, tandis que les figures 4 à 6 sont décrites plus en détail au niveau des exemples qui suivent, qui illustrent l'invention sans en limiter la portée

### Description détaillée des figures

Sur les figures 1A et 1B, est représenté un premier exemple de fibre 1 selon l'invention (fibre sans gaine de protection), qui comprend une âme 11 en matériau fibrable et présentant une surface externe 111, qui est recouverte par un revêtement extérieur 2 à base de nitrure de bore hexagonal et de bentonite.

Sur les figures 2A et 2B, est représenté un deuxième exemple de fibre selon l'invention (fibre avec gaine de protection), qui se différencie de celui représenté sur les figures 1A et 1B en ce qu'il comprend en outre une gaine de protection 12 en matériau polymère entourant l'âme 11 sur au moins une partie spécifique de la fibre (sur toute la longueur dans le cas de l'exemple illustré sur la figure 2), la gaine de protection 12 présentant une surface interne 120 en contact avec l'âme 11 et une surface externe 121 en contact avec le revêtement extérieur 2.

### EXEMPLES

La nature des produits utilisés pour la fabrication des fibres selon l'invention et le procédé mis en œuvre, ainsi que les procédés de caractérisation sont détaillés ci-après.

### Produits, matières premières :

- solvant pour la dénudation par voie chimique : dichlorométhane, isopropanol ;
- poudre de BN hexagonal ;
- bentonite de formule générale Al₂H₂O₁₂Si₄ ;
- échantillons de fibres optiques (notamment en silice, saphir, ou chalcogènure) comprenant une gaine de protection en polymère organique (par exemple en polyacrylate) ;
- préformes de verre.

### Dispositifs et tests de caractérisation structurale et microstructurale

Une caractérisation physico-chimique complète a été réalisée avec des techniques complémentaires à différentes échelles pour caractériser la couche de revêtement appliqué en utilisant :
- la microscopie optique,
- l'analyse par Diffraction des Rayons (DRX),
- test de tenue à température élevée comprenant un chauffage à 1000°C des échantillons de fibres selon l'invention, avec une rampe de chauffage à 10°C/min, suivi d'un refroidissement par inertie ou instantané ;
- test de tenue à température basse comprenant un chauffage à 800°C des échantillons de fibres selon l'invention, avec une rampe de chauffage à 10°C/min, suivi d'un refroidissement à température ambiante par inertie, puis une trempe dans de l'azote liquide, à -195,72 °C, durant deux heures ;
- détermination du comportement de la réponse Bragg des échantillons de fibres selon l'invention par l'analyse de la réflectivité à la longueur d'onde de Bragg via une source laser large bande et un analyseur de spectre optique.

### EXEMPLE 1 : Fabrication d'un exemple de composition pâteuse C pour revêtement de fibre.

Dunitrure de bore et de la benonite (à raison d'au moins 10% en poids de bentonite) sont broyés à l'aide d'un broyeur planétaire, avec une inversion du sens de rotation toutes les 5 minutes (pour une granulométrie satisfaisante).

Le produit de broyage ainsi obtenu est dispersé dans une grande quantité d'eau (environ 250 mL) pour former une suspension.

La suspension ainsi obtenue est évaporée à sec, dans un tube de Schlenk de 500 mL. L'évaporation est faite sous vide primaire (10⁻³ Pa) à l'aide d'une rampe vide/argon. Durant toute la durée de l'opération, le tube de Schlenk est maintenu à 60°C au bain marie, via un bain d'huile. Au bout de 4 à 6 heures d'évaporation : l'extrait obtenu sec est broyé manuellement (mortier et pilon). La poudre obtenue peut être conservée à l'étuve à 50 °C ou dans un dessiccateur durant plusieurs mois.

Au moment de faire le dépôt sur fibre, la poudre obtenue est dispersée dans au moins 20 mL d'eau distillée.

On obtient la composition pâteuse selon l'invention C.

### EXEMPLE 2 : Fabrication d'une fibre revêtue selon l'invention conformément à un premier mode de réalisation en post-procédé

### Etape A

On utilise des échantillons de fibres optiques commerciales (notamment en silice, saphir, ou chalcogènure) comprenant une gaine de protection en polyacrylate sont dénudés lors d'une étape A'.

### Etape A'

Pour rappel, les fibres optiques, lors de leur fabrication, sont classiquement protégées par des polymères organiques : sans ce revêtement de protection, les fibres optiques sont extrêmement vulnérables aux contacts mécaniques, les rendant difficilement manipulables. Or, ce revêtement organique est par nature incompatible avec un déploiement de la fibre optique en environnement sévère.

Il est donc préférable d'enlever au moins partiellement ce revêtement. Cette opération A' de dénudation est réalisée de préférence par une attaque chimique. L'intérêt de cette étape A' est de dénuder une portion spécifique de la fibre optique, soit à une extrémité soit sur une zone définie au préalable. Généralement, à chaque extrémité de la fibre, le revêtement initial est conservé sur une longueur suffisante de sorte à pouvoir à minima maintenir la fibre en position lors de l'étape de dépôt du revêtement sans fragiliser. Les longueurs sont ajustées en fonction du type d'application visée.

Le solvant utilisé est le dichlorométhane, lorsqu'il s'agit d'une gaine protectrice originelle de type polyacrylate (cas standard).

Si les échantillons de fibres optiques commerciales comprennent une gaine de protection en un polymère autre qu'un polyacrylate et qui n'est pas sensible au dichlorométhane, on utilisera un autre solvant apte à dissoudre ce polymère. Si la gaine de protection est par exemple en polyimide, on utilisera de l'acide chlorhydrique ou de l'acide sulfurique à chaud pour la dissoudre.

L'étape A' de dénudation par voie chimique permet d'éviter une fragilisation de la fibre, contrairement à une dénudation mécanique (à la pince ou à la lame de rasoir).

Pour certaines applications, il peut être préférable de conserver la gaine protectrice originelle de la fibre optique (polyacrylate ou poly-imide, déposée au cours de la fabrication de la fibre optique, ou en post-procédé). Le revêtement 2 à base de BN et de bentonite conforme à la présente invention peut alors enduire directement la fibre non dénudée. Dans ce cas, l'étape A') de dénudation n'est donc pas réalisée.

### Etape B

On utilise la composition pâteuse C de l'exemple 1.

### Etape C

On procède alors à l'enduction d'au moins une partie d'un échantillon de fibre dénudée avec la composition pâteuses C de façon à former une couche humide sur la fibre, par exemple par immersion.

### Etape D

L'échantillon est ensuite placé à l'étuve à 100°C. Le revêtement est sec au toucher après 15 secondes. Après ce traitement, la fibre est enroulable sur une bobine standard (de 158 mm de rayon typiquement).

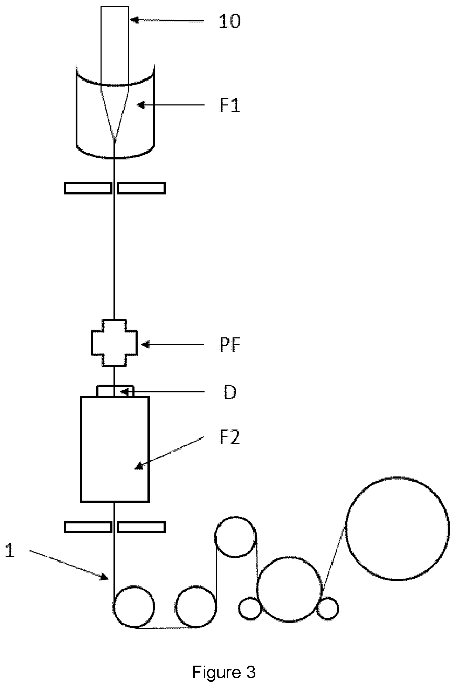

### EXEMPLE 3 : Fabrication d'une fibre revêtue selon l'invention conformément à un deuxième mode de réalisation en tour de fibrage (cf. figure 3)

Pour certaines applications, la fibre optique présente à elle seule un intérêt. La spécificité requise pour l'application réside dans la fabrication même de la fibre (par exemple une préforme présentant une composition spécifique exaltant la diffusion Rayleigh). Les longueurs mises en œuvre pour ces applications sont plutôt de quelques dizaines de mètres, jusqu'à plusieurs kilomètres. Dans ce cas, il est préférable de déposer le revêtement à base de BN et de bentonite directement lors du fibrage de la préforme, i.e. sur tour de fibrage.

On utilise à cette fin une tour de fibrage telle que représentée sur la Figure 3.

### Etape A

Une préforme de verre 10 est introduite dans un four F1 chauffé à une température d'environ 2000°C. Sous l'effet de la chaleur et de la gravité, le verre ramollit et conduit à la formation d'une « goutte ». En s'affinant, la préforme forme par homothétie une fibre de verre 11 qui constitue l'âme de la fibre 1 selon l'invention. Cette fibre est classiquement revêtue par du polyacrylate injecté sous pression et réticulé par UV puis est entrainée par un cabestan à une vitesse contrôlée.

### Etape B

On utilise la composition pâteuse C.

### Etape C

La composition pâteuse C est appliquée sur la fibre à pression atmosphérique, ou en surpression. Un porte-filière PF standard, muni de son diffuseur est utilisé pour contenir la composition pâteuse. Le diffuseur n'a pas d'autre intérêt que de réduire le diamètre de sortie du porte-filière. Le volume nécessaire pour recouvrir 100 m d'une fibre de 125 µm de diamètre est estimé à 10 mL.

### Etape D

Un four tubulaire F2 est placé à la verticale à 220 mm en dessous du porte filière PF. La zone chaude est d'environ 250 mm. La température du four est de 250°C. Un diaphragme D est placé sur la sortie haute du four pour éviter un échauffement du porte-filière.

### Paramètres de fibrage

Les paramètres de fibrage à maîtriser pour assurer un dépôt correct du revêtement sont : la vitesse, et la température du four de séchage (ici F2). Ces deux paramètres sont liés au matériel utilisé. La vitesse de fibrage doit être comprise entre 4 et 8 m/min. En dessous de 4 m/min, le revêtement n'adhère pas à la fibre. La température, quelle que soit la vitesse choisie, ne doit pas être inférieure à250°C. Des vitesses de dépôt plus élevées peuvent être envisagées avec l'utilisation d'un four de zone de chauffage plus grande que 20 cm.

### EXEMPLE 4 : caractérisation des revêtements selon l'invention

Différents tests ont été ensuite réalisés pour caractériser les revêtements de BN et de bentonite conformes à l'invention.

Afin de déceler d'éventuelles modifications physico-chimiques du revêtement (rédhibitoires pour les applications visées), les échantillons sont observés au microscope optique, caractérisés en DRX, et sous différentes conditions de température. Le comportement opto-mécanique est également étudié.

Un premier test de tenue en température des revêtements formés à l'exemple 3 a été réalisé à 1000°C, montée 10°C/minutes jusqu'à 1000°C, pendant une durée de 500 heures, puis refroidissement par inertie. La figure 4 est une observation de l'échantillon sous microscope optique après ce traitement thermique. Ces observations montrent que le revêtement ne présente aucune altération de son intégrité (fissure ou fracture).

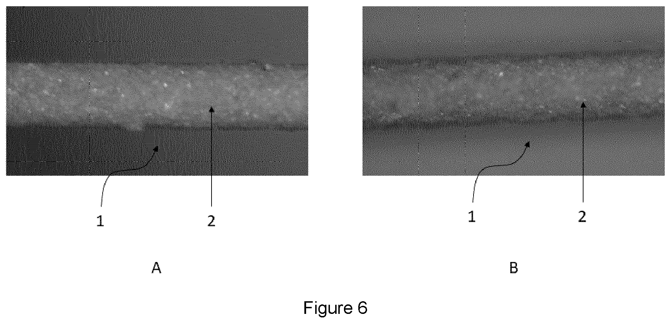

Le comportement de ce revêtement sous basse température a également été étudié. Pour cela, il a été soumis à un traitement thermique à 800 °C pour stabiliser le revêtement, puis une immersion par trempe dans de l'azote liquide, à -195,72 °C, durant deux heures. Aucune dégradation chimique ni physique n'ont été observées, comme illustré sur les photos de la Figure 6.

D'autres échantillons de fibres possédant des réseaux de Bragg revêtus BN sont également étudiés sous différents isothermes (à haute et basse températures), afin de valider le critère de non-modification des propriétés opto- mécaniques de la fibre. En effet, il est primordial que le revêtement n'altère pas la sensibilité du capteur qu'il protège. Des cycles de chauffage et refroidissement successifs sont également répétés sur des échantillons avec et sans revêtement afin de valider le bon comportement en dynamique (dilatation thermique des différents matériaux).

De même que le comportement de la réponse Bragg est comparé avec et sans revêtement, comme illustré sur la Figure 5 lors d'un cycle sur plus de 800 heures à 800 °C.

### LISTE DES REFERENCES

1. WO2020/222152 (2019-08-27) - « *Boron nitride nanotube coated optical waveguide and uses thereof »* - NRC - NATIONAL RESEARCH COUNCIL CANADA
2. Xin'gang Luan, Xinming Xu, Min Li, Rong Yu, Qiqi Zhang, Sam Zhang and Laifei Cheng. "Design, preparation, and properties of a boron nitride coating of silica optical fiber for high temperature sensing applications". Journal of Alloys and Compounds, Volume 850, 5 January 2021, 156782.
3. Xin'gang Luan, Rong Yu, Qiqi Zhang, Sam Zhang and Laifei Cheng. "Boron nitride coating of sapphire optical fiber for high temperature sensing applications". Surface and Coatings Technology, Volume 363, 15 April 2019, pages 203-209.
4. Xin'gang Luan, Xinming Xu, Rong Yu, Qiqi Zhang, Sam Zhang and Laifei Cheng. "BN/SiBCN light-leakage-proof coatings of silica optical fiber for long term sensors at high temperatures". Chinese Journal of Aeronautics, Volume 34, Issue 5, May 2021, pages 93-102.

## Revendications

1. Fibre (1) comprenant une âme (11) en matériau fibrable et présentant une surface externe (111), ladite fibre étant **caractérisée en ce qu'**elle comporte en outre un revêtement extérieur (2) comportant un mélange de nitrure de bore hexagonal et de bentonite, à raison d'au moins 10% en poids de bentonite par rapport au poids total dudit revêtement extérieur (2).

2. Fibre (1) selon la revendication 1, selon laquelle l'âme (11) est constituée d'un matériau choisi parmi les matériaux à transition vitreuse et le verre de saphir.

3. Fibre (1) selon l'une quelconque des revendications 1 et 2, comprenant en outre une gaine de protection (12) en matériau polymère entourant ladite âme (11) sur au moins une partie de la longueur de ladite fibre (1), ladite gaine de protection (12) présentant une surface interne (120) en contact avec l'âme (11) et une surface externe (121) en contact avec ledit revêtement extérieur (2).

4. Fibre (1) selon l'une quelconque des revendications 1 et 2, selon laquelle ledit revêtement extérieur (2) est directement en contact avec l'âme (11).

5. Fibre (1) selon l'une quelconque des revendications 1 à 4, selon laquelle l'âme (11) de ladite fibre présente un diamètre compris entre 100 µm et 10 mm, de préférence entre 100 µm et 140 µm, et de manière préférée 125 µm.

6. Fibre (1) selon l'une quelconque des revendications 1 à 5, selon laquelle le revêtement extérieur (2) présente une épaisseur comprise entre 5 et 240 µm.

7. Fibre (1) selon l'une quelconque des revendications 1 à 6, selon laquelle ladite fibre (1) est une fibre optique.

8. Composant optique comprenant une ou plusieurs fibres optiques (1) telles que définies selon l'une quelconque des revendications 1 à 7.

9. Procédé de fabrication d'une fibre telle que définie selon l'une quelconque des revendications 1 à 7 par dépôt d'un revêtement extérieur (2) sur la surface externe (111, 121) d'une fibre (1), ledit procédé comprenant les étapes suivantes :
- A) fourniture ou réalisation d'une âme (11) de fibre en matériau fibrable, ladite âme (11) recouverte ou non d'une gaine de protection (12) ;
- B) fourniture d'une composition pâteuse pour revêtement de fibre obtenue selon un procédé de fabrication d'une composition pâteuse pour revêtement de fibre ;
- C) enduction d'au moins une partie de ladite fibre (1) avec ladite composition pâteuse de façon à former une couche humide (21) sur ladite fibre (1) ;
- D) traitement thermique de ladite fibre optique (1) revêtue de ladite couche humide (21) à une température comprise entre 100°C et 250°C pendant une durée suffisante pour former une couche revêtement extérieur (2) apte à être manutentionnée.

10. Procédé selon la revendication 9, dans lequel lesdites étapes C et D sont réitérées une ou plusieurs fois jusqu'à obtention de l'épaisseur souhaitée de revêtement extérieur (2).

11. Procédé selon l'une quelconque des revendications 9 et 10, selon lequel :
- l'étape A) est une étape de fourniture d'une fibre (1) comprenant une âme (11) en matériau fibrable et qui est recouverte d'une gaine de protection (12), de sorte que
- les étapes B à D sont réalisées postérieurement à la fabrication de ladite fibre (1) ; et l'étape D) de traitement thermique est un séchage réalisé dans une étuve à 100°C.

12. Procédé selon la revendication 11, selon lequel ladite gaine de protection (12) est, lors d'une étape A'), la fibre selon l'invention préalablement à l'étape **B,** au moins partiellement éliminée sur une longueur spécifique de ladite fibre (1) pour supprimer sur au moins une partie de la longueur de la fibre, la gaine de protection.

13. Procédé selon l'une quelconque des revendications 9 et 10, selon lequel l'étape A) est une étape de réalisation d'une fibre (1) sur une tour de fibrage.

14. Procédé de fabrication selon l'une quelconque des revendications 9 à 13, dans lequel l'étape (B) de fourniture d'une composition pâteuse pour revêtement de fibre comprend les étapes suivantes :
i. dispersion dans de l'eau d'un mélange sec de nitrure de bore **BN** hexagonal et de bentonite ; à raison d'au moins 10% en poids de bentonite par rapport au poids total dudit mélange sec, pour former une suspension aqueuse ;
ii. évaporation de l'eau contenue dans ladite suspension aqueuse, jusqu'à obtenir un extrait sec pulvérulent ;
iii. dispersion dudit extrait sec pulvérulent dans de l'eau pour former une composition pâteuse, à raison d'au moins 40% massique d'extrait sec dans l'eau.

15. Composition pâteuse (20) pour revêtement de fibre obtenue par le procédé comprenant les étapes suivantes :
i. dispersion dans de l'eau d'un mélange sec de nitrure de bore **BN** hexagonal et de bentonite ; à raison d'au moins 10% en poids de bentonite par rapport au poids total dudit mélange sec, pour former une suspension aqueuse ;
ii. évaporation de l'eau contenue dans ladite suspension aqueuse, jusqu'à obtenir un extrait sec pulvérulent ;
iii. dispersion dudit extrait sec pulvérulent dans de l'eau pour former une composition pâteuse, à raison d'au moins 40% massique d'extrait sec dans l'eau.

## Patentansprüche

1. Faser (1), die einen Kern (11) aus faserfähigem Material umfasst und eine äußere Oberfläche (111) aufweist, wobei die Faser **dadurch gekennzeichnet ist, dass** sie ferner eine äußere Beschichtung (2) enthält, die eine Mischung aus hexagonalem Bornitrid und Bentonit mit einem Gewichtsanteil von mindestens 10 % Bentonit bezogen auf das Gesamtgewicht der äußeren Beschichtung (2) enthält.

2. Faser (1) nach Anspruch 1, wobei der Kern (11) aus einem Material besteht, das unter Glasübergangsmaterialien und Saphirglas ausgewählt ist.

3. Faser (1) nach einem der Ansprüche 1 und 2, ferner umfassend einen Schutzmantel (12) aus Polymermaterial, der den Kern (11) über mindestens einen Teil der Länge der Faser (1) umgibt, wobei der Schutzmantel (12) eine innere Oberfläche (120) aufweist, die mit dem Kern (11) in Kontakt steht, und eine äußere Oberfläche (121), die mit der äußeren Beschichtung (2) in Kontakt steht.

4. Faser (1) nach einem der Ansprüche 1 und 2, wobei die äußere Beschichtung (2) direkt mit dem Kern (11) in Kontakt steht.

5. Faser (1) nach einem der Ansprüche 1 bis 4, wobei der Kern (11) der Faser einen Durchmesser zwischen 100 µm und 10 mm, vorzugsweise zwischen 100 µm und 140 µm, und bevorzugt von 125 µm aufweist.

6. Faser (1) nach einem der Ansprüche 1 bis 5, wobei die äußere Beschichtung (2) eine Dicke zwischen 5 und 240 µm aufweist.

7. Faser (1) nach einem der Ansprüche 1 bis 6, wobei die Faser (1) eine optische Faser ist.

8. Optische Komponente, die eine oder mehrere optische Fasern (1) gemäß einem der Ansprüche 1 bis 7 umfasst.

9. Verfahren zur Herstellung einer Faser gemäß einem der Ansprüche 1 bis 7 durch Aufbringen einer äußeren Beschichtung (2) auf die äußere Oberfläche (111, 121) einer Faser (1), wobei das Verfahren die folgenden Schritte umfasst:
- A) Bereitstellen oder Herstellen eines Faserkerns (11) aus faserfähigem Material, wobei der Kern (11) mit einem Schutzmantel (12) bedeckt ist oder nicht;
- B) Bereitstellen einer pastösen Zusammensetzung für die Faserbeschichtung, die nach einem Verfahren zur Herstellung einer pastösen Zusammensetzung für die Faserbeschichtung erhalten wird;
- C) Beschichten mindestens eines Teils der Faser (1) mit der pastösen Zusammensetzung, um eine feuchte Schicht (21) auf der Faser (1) zu bilden;
- D) Wärmebehandlung der optischen Faser (1), die mit der feuchten Schicht (21) beschichtet ist, bei einer Temperatur zwischen 100 °C und 250 °C für eine ausreichende Dauer, um eine handhabungsfähige äußere Beschichtungsschicht (2) zu bilden.

10. Verfahren nach Anspruch 9, wobei die Schritte C und D ein- oder mehrmals wiederholt werden, bis die gewünschte Dicke der äußeren Beschichtung (2) erreicht ist.

11. Verfahren nach einem der Ansprüche 9 und 10, wobei:
- Schritt A) ein Schritt des Bereitstellens einer Faser (1) ist, die einen Kern (11) aus faserfähigem Material umfasst und die mit einem Schutzmantel (12) bedeckt ist, so dass
- die Schritte B bis D nach der Herstellung der Faser (1) durchgeführt werden; und der Schritt D) der Wärmebehandlung eine Trocknung ist, die in einem Ofen bei 100 °C durchgeführt wird.

12. Verfahren nach Anspruch 11, wobei der Schutzmantel (12) in einem Schritt A') die erfindungsgemäße Faser vor Schritt B ist, die zumindest teilweise über eine bestimmte Länge der Faser (1) entfernt wird, um auf mindestens einem Teil der Faserlänge die Schutzhülle zu entfernen.

13. Verfahren nach einem der Ansprüche 9 und 10, wobei der Schritt A) ein Schritt zum Herstellen einer Faser (1) auf einem Faserziehturm ist.

14. Herstellungsverfahren nach einem der Ansprüche 9 bis 13, wobei der Schritt (B) des Bereitstellens einer pastösen Zusammensetzung für die Faserbeschichtung die folgenden Schritte umfasst:
i. Dispergieren in Wasser einer trockenen Mischung aus hexagonalem Bornitrid BN und Bentonit; mit einem Gewichtsanteil von mindestens 10 Bentonit bezogen auf das Gesamtgewicht der trockenen Mischung, um eine wässrige Suspension zu bilden;
ii. Verdampfen des in der wässrigen Suspension enthaltenen Wassers, bis ein pulverförmiger Trockenextrakt entsteht;
iii. Dispergieren des pulverförmigen Trockenextrakts in Wasser zu einer pastösen Zusammensetzung mit einem Massenanteil von mindestens 40 % Trockenextrakt in Wasser.

15. Pastöse Zusammensetzung (20) für die Faserbeschichtung, die durch das Verfahren erhalten wird, das die folgenden Schritte umfasst:
i. Dispergieren in Wasser einer trockenen Mischung aus hexagonalem Bornitrid BN und Bentonit; mit einem Gewichtsanteil von mindestens 10 Bentonit bezogen auf das Gesamtgewicht der trockenen Mischung, um eine wässrige Suspension zu bilden;
ii. Verdampfen des in der wässrigen Suspension enthaltenen Wassers, bis ein pulverförmiger Trockenextrakt entsteht;
iii. Dispergieren des pulverförmigen Trockenextrakts in Wasser zu einer pastösen Zusammensetzung mit einem Massenanteil von mindestens 40 % Trockenextrakt in Wasser.

## Claims

1. Fibre (1) comprising a core (11) made of a fiberisable material and having an outer surface (111), said fibre being **characterised in that** it further comprises an outer coating (2) comprising a mixture of hexagonal boron nitride and bentonite, in a proportion of at least 10 wt.% of bentonite relative to the total weight of said outer coating (2).

2. Fibre (1) according to claim 1, according to which the core (11) is made of a material selected from among glass-transition materials and sapphire glass.

3. Fibre (1) according to any one of claims 1 and 2, further comprising a protective sheath (12) made of a polymeric material surrounding said core (11) over at least one portion of the length of said fibre (1), said protective sheath (12) having an inner surface (120) in contact with the core (11) and an outer surface (121) in contact with said outer coating (2).

4. Fibre (1) according to any one of claims 1 and 2, according to which said outer coating (2) is directly in contact with the core (11).

5. Fibre (1) according to any one of claims 1 to 4, according to which the core (11) of said fibre has a diameter between 100 µm and 10 mm, preferably between 100 µm and 140 µm, and preferably 125 µm.

6. Fibre (1) according to any one of claims 1 to 5, according to which the outer coating (2) has a thickness between 5 and 240 µm.

7. Fibre (1) according to any one of claims 1 to 6, according to which said fibre (1) is an optical fibre.

8. Optical component comprising one or more optical fibre(s) (1) as defined according to any one of claims 1 to 7.

9. Method for manufacturing a fibre as defined according to any one of claims 1 to 7 by depositing an outer coating (2) over the outer surface (111, 121) of a fibre (1), said method comprising the following steps:
- A) providing or making a fibre core (11) made of a fiberisable material, said core (11) being covered, or not, with a protective sheath (12);
- B) providing a pasty composition for fibre coating obtained according to a method for manufacturing a pasty composition for fibre coating;
- C) coating at least one portion of said fibre (1) with said pasty composition so as to form a wet layer (21) over said fibre (1);
- D) heat treating said optical fibre (1) coated with said wet layer (21) at a temperature between 100°C and 250°C for a sufficient duration to form an outer coating layer (2) capable of being handled.

10. Method according to claim 9, wherein said steps C and D are reiterated once or several times until obtaining the desired thickness of the outer coating (2).

11. Method according to any one of claims 9 and 10, wherein:
- step A) is a step of providing a fibre (1) comprising a core (11) made of a fiberisable material and which is covered with a protective sheath (12), such that
- steps B to D are carried out after manufacture of said fibre (1); and the heat treatment step D) is a drying carried out in an oven at 100°C.

12. Method according to claim 11, according to which said protective sheath (12) is, during a step A'), the fibre according to the invention prior to step B, at least partially removed over a specific length of said fibre (1) to remove the protective sheath over at least one portion of the length of the fibre.

13. Method according to any one of claims 9 and 10, according to which step A) is a step of making a fibre (1) on a fiberising tower.

14. Manufacturing method according to any one of claims 9 to 13, wherein step (B) of providing a pasty composition for fibre coating comprises the following steps:
i. dispersing in water a dry mixture of hexagonal boron nitride BN and bentonite; in a proportion of at least 10 wt.% of bentonite relative to the total weight of said dry mixture, to form an aqueous suspension;
ii. evaporating the water contained in said aqueous suspension, until obtaining a pulverulent dry extract;
iii. dispersing said pulverulent dry extract in water to form a pasty composition, in a proportion of at least 40 wt.% of dry extract in water.

15. Pasty composition (20) for fibre coating obtained by the method comprising the following steps:
i. dispersing in water a dry mixture of hexagonal boron nitride BN and bentonite; in a proportion of at least 10 wt.% of bentonite relative to the total weight of said dry mixture, to form an aqueous suspension;
ii. evaporating the water contained in said aqueous suspension, until obtaining a pulverulent dry extract;
iii. dispersing said pulverulent dry extract in water to form a pasty composition, in a proportion of at least 40 wt.% of dry extract in water.
